# EUROPEAN PATENT APPLICATION

(11) **EP 4 708 488 A1**
(43) Date of publication of application: **11.03.2026**
(21) Application number: 24886374.8
(22) Date of filing: 01.11.2024
(51) Int. Cl.: H01M 50/183, H01M 50/105, H01M 50/172, H01M 50/242, H01M 50/249

(54) **BATTERY MODULE, AND BATTERY PACK AND VEHICLE INCLUDING SAME**

(30) Priority: 03.11.2023 KR 20230151099; 05.08.2024 KR 20240104119; 31.10.2024 KR 20240152849
(71) Applicant: LG Energy Solution, Ltd., Seoul 07335 (KR)
(72) Inventor: PARK, Gi-Chan, Daejeon 34122 (KR); KIM, Soo-Youl, Daejeon 34122 (KR); KIM, Kwang-Mo, Daejeon 34122 (KR); CHANG, Hyuk-Kyun, Daejeon 34122 (KR); JUNG, Hye-Mi, Daejeon 34122 (KR)
(74) Representative: Plasseraud IP
(86) International application number: PCT/KR2024/017092
(87) International publication number: WO 2025/095704

(57) **Abstract**

The present disclosure may provide a battery module including a plurality of battery cells having a storage portion and a sealing portion, respectively, and configured to be stacked on each other, a module case configured to store the plurality of battery cells in an inner space, and a pressing member positioned to face at least one surface of a terrace portion where an electrode lead is located in the sealing portion of the battery cell, and configured to pressurize the terrace portion when internal pressure inside the battery cell increases.

## Description

### TECHNICAL FIELD

The present disclosure relates to a battery module, and a battery pack and a vehicle including the same.

This application is based on and claims priority from Korean Patent Application No. 10-2023-0151099, filed on November 03, 2023, with the Korean Intellectual Property Office, the disclosure of which is incorporated herein in its entirety by reference.

This application is based on and claims priority from Korean Patent Application No. 10-2024-0104119, filed on August 05, 2024, with the Korean Intellectual Property Office, the disclosure of which is incorporated herein in its entirety by reference.

This application is based on and claims priority from Korean Patent Application No. 10-2024-0152849, filed on October 31, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or pack may be set in various ways depending on the required output voltage or charge/discharge capacity.

Meanwhile, since the battery cells undergo chemical reactions during charging and discharging, their performance may deteriorate if they are used at a temperature higher than an appropriate temperature, and if the temperature is not controlled to the appropriate temperature, unexpected ignition or explosion is likely to occur. In addition, the battery module has a structure in which the battery cells are densely stored inside a module frame. Therefore, if a thermal event occurs in any battery cell, high-temperature gas and flames emitted therefrom may spread to adjacent battery cells, causing a chain reaction of explosion in the battery cells, which is very dangerous.

In particular, if the battery module contains multiple battery cells, the high-temperature gas, flames, or sparks generated during thermal runaway in a specific battery cell are likely to erupt to the front and rear of the battery cells where the electrode leads of the battery module are located. As a result, the components located at both ends of the battery module, such as end plates or parts of a bus-bar frame, may be damaged by heat, which may bring about structural collapse.

In addition, the flames emitted to the outside through the end plates may cause thermal propagation to adjacent battery modules. In particular, if flame or the like generated from a specific battery module spreads to the end plate of another battery module, there is a high risk of thermal propagation or chain ignition between modules. This may cause the thermal runaway to spread to the entire battery pack including multiple battery modules.

Therefore, there is a need to develop a structure capable of preventing the discharge of high-temperature gas or flame emitted from a battery cell where a thermal event occurs or appropriately controlling the discharge direction, thereby delaying thermal runaway between the battery cells or battery modules.

### DISCLOSURE

### Technical Problem

The present disclosure is designed to solve the problems of the related art, and therefore the present disclosure is directed to providing a battery module with improved safety and reliability by appropriately controlling the venting direction of high-temperature gas or flames generated from a battery cell in the event of an abnormal situation of the battery module, thereby effectively preventing thermal propagation between battery cells or battery modules.

The present disclosure is also to provide a battery pack including a battery module with an improved structure, and a vehicle including the battery pack.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including a plurality of battery cells having a storage portion and a sealing portion, respectively, and configured to be stacked on each other, a module case configured to store the plurality of battery cells in an inner space, and a pressing member positioned to face at least one surface of a terrace portion where an electrode lead is located in the sealing portion of the battery cell, and configured to pressurize the terrace portion when internal pressure inside the battery cell increases.

The pressing member may include a first pressing member disposed to face a first surface of the terrace portion, and a second pressing member disposed to face a second surface of the terrace portion, which faces in an opposite direction of the first surface.

The first pressing member and the second pressing member may be configured to be capable of being coupled to each other.

At least one of the first pressing member or the second pressing member includes a fastening portion extending toward each other.

The fastening portion may include a hinge fastening portion having one end coupled to the first pressing member so as to rotate around a hinge and the other end coupled to the second pressing member.

The first pressing member and the second pressing member may be formed integrally.

The pressing member may include a hole through which the terrace portion passes.

A plurality of pressing member may be provided and at least two of the plurality of pressing members may be formed integrally.

The battery module may further include a barrier interposed between adjacent battery cells, and the pressing member may be attached to the barrier.

The pressing member may be positioned between the terrace portion of the battery cell and the barrier.

The pressing member may be in contact with at least one surface of the terrace portion and may pressurize the terrace portion.

The plurality of battery cells may stand in a first direction and may be stacked in a second direction perpendicular to the first direction, and the pressing member may extend in the first direction along the terrace portion.

The pressing member may include an insulating or heat-resistant material.

The pressing member may include a composite layer including different materials.

The battery module may further include a bus-bar assembly positioned between the plurality of battery cells and the module case, and the pressing member may be disposed to be surrounded by the bus-bar assembly, the storage portion, and the sealing portion.

The bus-bar assembly may include a module bus-bar electrically connected to the electrode lead and a bus-bar housing configured such that the module bus-bar is seated on and fixed to the same, and the at least one surface of the pressing member may be positioned to face an inner surface of the bus-bar housing. A front-back length of the pressing member may be greater than a front-back length of the terrace portion. A vertical height of the pressing member may be greater than a vertical height of the battery cell. A vertical height of the pressing member may be configured to be greater than a distance between an upper plate and a lower plate of the module case, and the pressing member may be configured to be pressurized in a vertical direction by the upper plate and the lower plate.

According to another aspect of the present disclosure, there is provided a battery pack including a battery according to the present disclosure.

According to another aspect of the present disclosure, there is provided a vehicle including a battery pack according to the present disclosure.

### Advantageous Effects

According to one aspect of the present disclosure, when an abnormal situation such as thermal runaway occurs in a battery cell, it is possible to prevent or suppress the discharge of venting gas or flames toward the terrace portion. In particular, the space near the terrace portion of the battery cell may be relatively wide in the inner space of the battery module. However, according to the above aspect, since venting gas or flames are not discharged from the battery cell where a thermal event has occurred toward the terrace portion, it is possible to suppress or block propagation of thermal runaway due to the venting gas or flames to other battery cells through the space near the terrace portion.

In particular, according to an embodiment of the present disclosure, even if the internal pressure of the battery cell increases, the fused (sealed) part of the sealing portion may be prevented from being separated by the pressing member, thereby preventing the seal breakdown of the sealing portion. Therefore, it is possible to prevent high-temperature gas or flames from being discharged to the components positioned adjacent to the terrace portion, in particular, electrical components such as a bus-bar assembly or a module terminal disposed on the outer side thereof. Therefore, it is possible to prevent damage to various components located in the corresponding direction, and to prevent unintentional interruption of electrical connections between the battery cells or battery modules.

According to another aspect of the present disclosure, directional venting for discharging venting gas or the like in an intended direction may be more easily implemented. For example, according to an embodiment of the present disclosure, gas or flame may be discharged to the top of the battery cell or battery module. In this case, the safety and reliability of the battery module including multiple battery cells may be further improved.

In addition, according to another aspect of the present disclosure, it is possible to prevent other battery modules from being thermally damaged by high-temperature gas or flame generated from a specific battery module. In particular, according to this aspect of the present disclosure, propagation of thermal runaway between modules may be effectively prevented or delayed.

Therefore, it is possible to prevent or delay events due to thermal runaway in a battery pack including multiple battery modules or a device equipped with the same, such as fire or explosion.

In particular, in the case of electric vehicles, suppressing or delaying propagation of thermal runaway between the battery cells or battery modules may secure sufficient time for occupants to escape or drive.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view schematically illustrating the configuration of a battery module according to an embodiment of the present disclosure.
FIG. 2 is a partially exploded perspective view illustrating the battery module in FIG. 1.
FIG. 3a is a perspective view schematically illustrating the configuration of a battery cell and a pressing member included in a battery module according to an embodiment of the present disclosure.
FIG. 3b is a perspective view schematically illustrating the configuration of a battery cell and a pressing member included in a battery module according to another embodiment of the present disclosure.
FIG. 4a is a perspective view schematically illustrating a terrace portion of a battery module according to an embodiment of the present disclosure.
FIG. 4b is a side view schematically illustrating a battery module according to an embodiment of the present disclosure.
FIG. 5 is a cross-sectional view schematically illustrating a partial configuration of a battery module according to an embodiment of the present disclosure.
FIG. 6 is a cross-sectional view schematically illustrating a partial configuration of a battery module according to another embodiment of the present disclosure.
FIG. 7a is an enlarged view of part A2 in FIG. 6 according to an embodiment of the present disclosure.
FIG. 7b is an enlarged view of part A2 in FIG. 6 according to another embodiment of the present disclosure.
FIG. 8 is a cross-sectional view schematically illustrating a partial configuration of a battery module including a barrier according to another embodiment of the present disclosure.
FIG. 9 is a cross-sectional view schematically illustrating a partial configuration of a battery module including a barrier according to another embodiment of the present disclosure.
FIG. 10 is a cross-sectional view schematically illustrating a partial configuration of a battery module according to an embodiment of the present disclosure.
FIG. 11 is a side view schematically illustrating a battery module according to an embodiment of the present disclosure.
FIG. 12 is a side view schematically illustrating a battery module according to another embodiment of the present disclosure.
FIG. 13a is a perspective view schematically illustrating a pressing member according to another embodiment of the present disclosure.
FIG. 13b is a side view schematically illustrating a partial configuration of a battery module including a pressing member according to another embodiment of the present disclosure.
FIG. 14a is a perspective view illustrating a pressing member according to another embodiment of the present disclosure.
FIG. 14b is a side view schematically illustrating a partial configuration of a battery module including a pressing member according to another embodiment of the present disclosure.
FIG. 15 is a schematic view illustrating an assembly of a pressing member with a battery cell according to another embodiment of the present disclosure.
FIG. 16a is a perspective view illustrating a pressing member according to another embodiment of the present disclosure.
FIG. 16b is a side view schematically illustrating a partial configuration of a battery module according to another embodiment of the present disclosure.
FIG. 17 is a cross-sectional view schematically illustrating a partial configuration of a battery module including a pressing member according to another embodiment of the present disclosure.
FIG. 18 is a cross-sectional view schematically illustrating a partial configuration of a battery module including a pressing member according to another embodiment of the present disclosure.
FIG. 19 is a side cross-sectional view of a battery module according to an embodiment of the present disclosure.
FIG. 20 is a side cross-sectional view of a battery module according to another embodiment of the present disclosure.
FIG. 21 is a side cross-sectional view of a battery module according to another embodiment of the present disclosure.
FIG. 22 is an exploded perspective view schematically illustrating a battery pack including a battery module according to an embodiment of the present disclosure.
FIG. 23 is a perspective view schematically illustrating the configuration of a battery pack according to another embodiment of the present disclosure.
FIG. 24 is a perspective view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

The sizes of some elements shown in the attached drawings may be exaggerated, instead of reflecting their actual sizes, for convenience of explanation and clarification. In addition, the same reference numerals may be assigned to the same elements among the embodiments.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected', 'coupled', or 'fastened' to another element" should be understood that the elements may be directly connected, coupled, or fastened to each other, and that another element may be "interposed" between the elements, or that the elements may be "connected", "coupled", or "fastened" through another element.

A single element herein should be construed to encompass a plurality of elements. In this specification, the expression "an element 'is configured as' or 'includes' other elements or steps" should be understood that the element may exclude some other elements or steps and that the element may further include additional elements or steps.

Throughout the specification, "A and/or B", unless otherwise stated, may denote A or B, or A and B, and "C to D", unless otherwise stated, may denote "equal to or greater than C and equal to or less than D."

Meanwhile, in the embodiment of the present disclosure, the X-axis direction, unless otherwise specified, in which a plurality of battery cells 100 are stacked will be referred to as a left-right direction, the Y-axis direction, which is a horizontal direction orthogonal to the cell stacking direction, will be referred to as a front-back direction, and the Z-axis direction orthogonal to the X-Y plane will be referred to as an up-down direction (vertical direction). Furthermore, the Y-axis direction may also be referred to as a longitudinal direction of the cell in the case of a pouch-type cell. In addition, the left-right direction, the front-back direction, and the up-down direction may also be expressed as a first direction, a second direction, and a third direction, respectively.

Meanwhile, although terms indicating directions such as up, down, left, right, front, and back directions are used in this specification, it is obvious to those skilled in the art that these terms are only for convenience of explanation and may vary depending on the position of the target object or the position of the observer.

In addition, the present disclosure may include various embodiments. Redundant descriptions of substantially the same or similar configurations will be omitted from respective embodiments, and a description will be made based on differences therebetween.

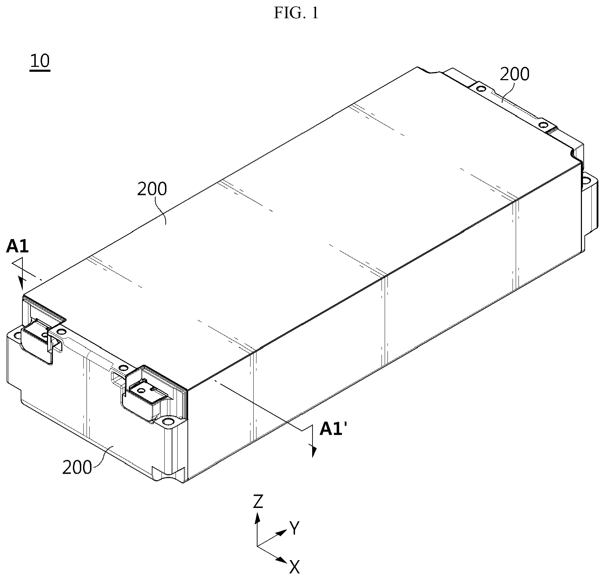

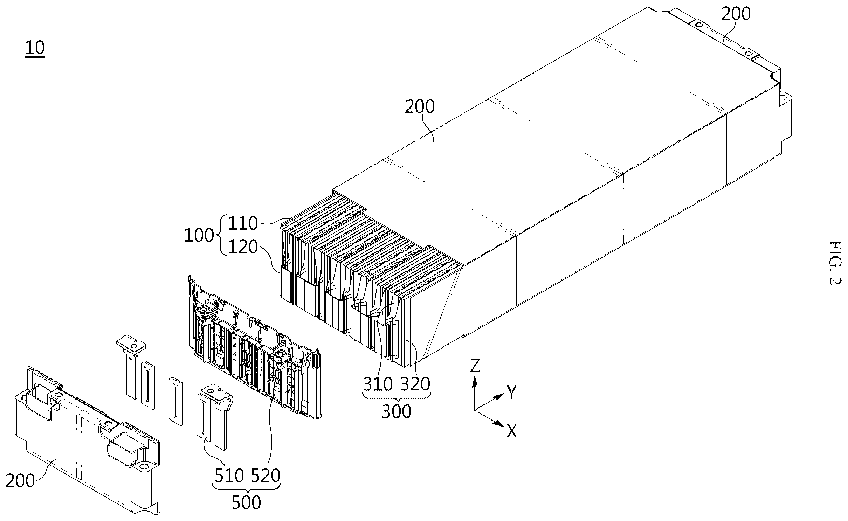

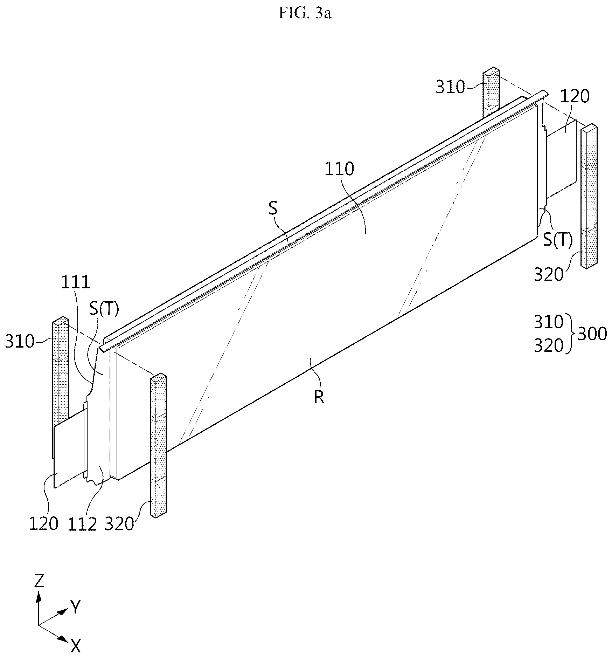

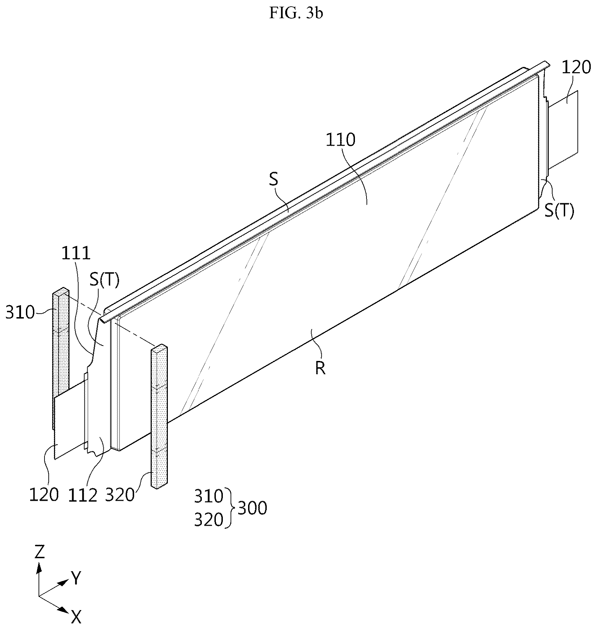

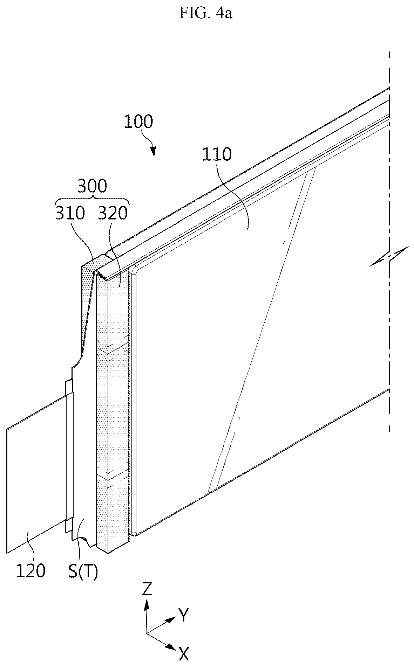

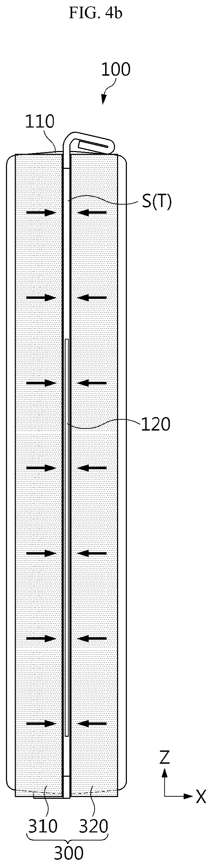

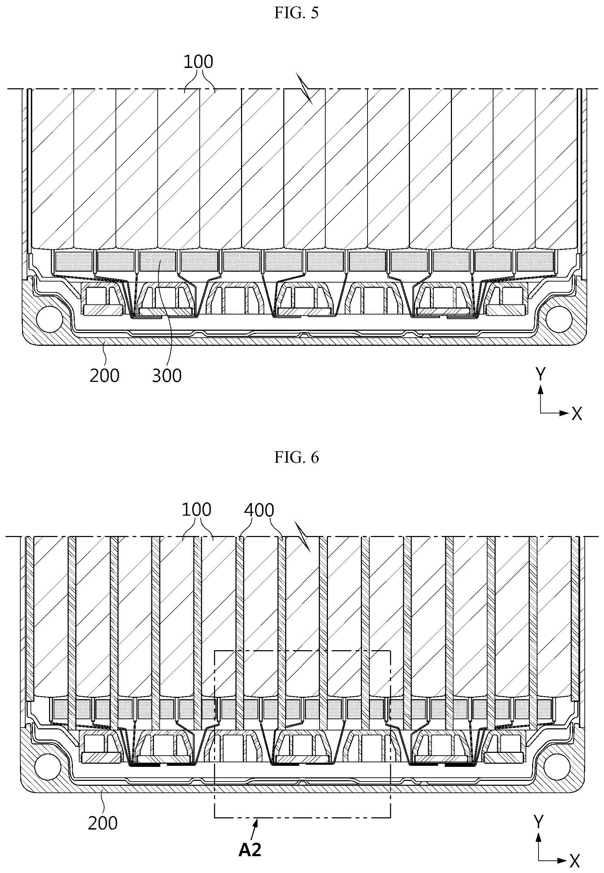

FIG. 1 is a perspective view schematically illustrating the configuration of a battery module 10 according to an embodiment of the present disclosure. FIG. 2 is a partially exploded perspective view illustrating the battery module 10 in FIG. 1. FIG. 3a is a perspective view schematically illustrating the configuration of a battery cell 100 and a pressing member 300 included in a battery module 10 according to an embodiment of the present disclosure. FIG. 3b is a perspective view schematically illustrating the configuration of a battery cell 100 and a pressing member 300 included in a battery module 10 according to another embodiment of the present disclosure. FIG. 4a is a perspective view schematically illustrating a terrace portion T of a battery module 10 according to an embodiment of the present disclosure. FIG. 4b is a side view schematically illustrating a battery module 10 according to an embodiment of the present disclosure. FIG. 5 is a cross-sectional view schematically illustrating a partial configuration of a battery module 10 according to an embodiment of the present disclosure, which may show, for example, a cross-sectional configuration taken along line A1 - A1' in FIG. 1.

Referring to FIGS. 1 to 5, the battery module 10 according to an embodiment of the present disclosure may include a battery cell 100, a module case 200, and a pressing member 300.

The battery cell 100 may include an electrode assembly, a cell case 110 that accommodates the electrode assembly, and an electrode lead 120 that is connected to the electrode assembly and extends outward from the cell case 110, thereby functioning as an electrode terminal.

The battery cell 100 may be a pouch-type secondary battery. Such a pouch-type secondary battery may be configured as a pouch in which a metal layer made of aluminum is interposed between polymer layers in the cell case 110.

Specifically, referring to FIG. 3a, the cell case 110 may have a storage portion R and a sealing portion S. The storage portion R may store an electrode assembly and an electrolyte. For example, the cell case 110 may have two pouches, for example, a left pouch and a right pouch, and the storage portion R may be positioned between the left pouch and the right pouch so that the edge of the storage portion R may be sealed. In this case, the storage portion R in at least a portion of the two pouches may have an inner space formed in a concave shape facing the electrode assembly, and the electrode assembly may be mounted in the inner space. Although the embodiment illustrated in FIG. 3a shows a double cup configuration in which the storage portion R is formed on both sides of the cell case 110, the present disclosure is not necessarily limited to the shape of the cell case 110. For example, the battery cell 100 may be configured in a single cup shape in which the storage portion R is formed only on one side of the cell case 110.

The sealing portion S may be configured to surround the storage portion R, which may indicate a portion in which the edges of the storage portion R are heat-fused. That is, the sealing portion S may be formed by sealing the edges of the storage portion R. In particular, the battery cell 100 may have four sides (edges) of the storage portion R. In this case, all of the four sides may be sealed, or only three sides may be sealed. A cell with four sealed sides may be called a four-sided sealing cell, and a cell with three sealed sides may be called a three-sided sealing cell. For example, in the implemented configuration illustrated in FIG. 3a, the battery cell 100 is configured in an upright posture such that the front, rear, and top sides of the left pouch and the right pouch are sealed, and such that the bottom sides of the left pouch and the right pouch are folded, instead of being sealed, to be connected to each other. That is, the battery cell 100 is configured to have three sealed sides.

Each battery cell 100 may have an electrode lead 120. The electrode lead 120 may include a positive electrode lead and a negative electrode lead, and the positive electrode lead and the negative electrode lead may be provided to protrude from the same side (edge) or different sides of the battery cell 100. The cell in which the positive electrode lead and the negative electrode lead are located on the same side may be called a unidirectional cell, and the cell in which the positive electrode lead and the negative electrode lead are located on different sides, in particular, on the opposite sides, may be called a bidirectional cell.

The electrode lead 120 may be configured to extend to the front and/or rear of the sealing portion S of the battery cell 100. In this case, the sealing portion S from which the electrode lead 120 extends outward may be defined as a terrace portion T.

A plurality of battery cells 100 may be included in a battery module. In addition, the plurality of battery cells 100 may be stacked on each other in at least one direction. For example, the plurality of battery cells 100 may be arranged side by side in the left-right direction (X-axis direction) while standing in the vertical direction (Z-axis direction). In particular, in the case of a three-sided sealing cell, the respective battery cells 100 may be provided to stand such that the side not having the sealing portion S is located at the bottom. In this case, each battery cell 100 may have the sealing portions S directed in the front-back direction (Y-axis direction) and upward direction (+Z-axis direction), and the storage portion R directed in the left-right direction (X-axis direction).

Meanwhile, the present disclosure is not limited to a specific type or shape of battery cell 100, and various battery cells 100 known at the time of filing the present disclosure may be applied to implement the cell assembly of the present disclosure. In the present embodiment, although a pouch-type secondary battery with high energy density and easy stacking will be described as shown in the drawings, it is obvious that a cylindrical or prismatic secondary battery may also be applied to the battery cell 100.

The module case 200 may be configured to accommodate a plurality of battery cells 100 in the inner space, as shown in FIGS. 1 and 2. That is, the module case 200 may have an empty space formed therein, and a plurality of battery cells 100 may be accommodated in this inner space. For example, the module case 200 may have an upper plate, a lower plate, a left plate, a right plate, a front plate, and a rear plate to form the inner space. In addition, the plurality of battery cells 100 may be stored in the limited inner space. Here, the module case 200 may include a metal and/or plastic material.

In addition, at least some of the plates constituting the module case 200 may be configured in an integrated form. For example, referring to FIG. 2, the module case 200 may be configured as a mono frame in which the upper plate, the lower plate, the left plate, and the right plate are integrated with each other. In this case, the mono frame may have front and rear openings, and the front and rear plates, as end frames, may be coupled to the front and rear openings of the mono frame, thereby sealing the inner space of the mono frame. As another example, the module case 200 may be configured as a U-frame in which the lower plate, the left plate, and the right plate are integrated with each other. In this case, the upper plate, the front plate, and the rear plate may be coupled to the top, front, and rear ends of the U-frame. Meanwhile, the respective components of the module case 200 may be coupled by various fastening methods such as welding or bolting. However, the present disclosure is not limited to a specific material, shape, or coupling method of the module case 200.

According to an embodiment, although not shown in the drawing, at least one of the plates constituting the module case 200, for example, the upper plate, may include at least one venting area through which venting gas emitted from the battery cell 100 is discharged. For example, the venting area may be configured as one of either a venting hole or a preliminary fracture line. According to an implemented configuration of the present disclosure, the upper plate of the module case 200 may be provided with a venting area to induce directional venting to the top of the battery module 10.

The pressing member 300 may be disposed outside the battery cell 100 and configured to pressurize at least a portion of the battery cell 100. Furthermore, the pressing member 300 may be configured to pressurize the sealing portion of the battery cell, in particular, the terrace portion T. That is, the pressing member 300 may be configured to suppress the terrace portion T from being opened or separated. In particular, the pressing member 300 may be configured to pressurize the terrace portion T so that the fused portion of the terrace portion T is not damaged or separated when the internal pressure increases inside the battery cell 100.

The pressing member 300 may be disposed in a space where the terrace portion T is disposed inside the module case 200, for example, at the front (e.g., in the -Y-axis direction) and/or the rear (e.g., in the +Y-axis direction) inside the module case 200. Referring to FIG. 3a, the pressing member 300 may be provided on both the front sealing portion S and the rear sealing portion S of the battery cell 100.

Alternatively, as shown in FIG. 3b, the pressing member 300 may be positioned only on the front side or rear side of the battery cell 100. In particular, the pressing member 300 may be positioned only on the front side of the battery cell 100.

The pressing member 300 may be positioned to face at least a portion of the surface of the battery cell 100. In particular, the pressing member 300 may be positioned to face the sealing portion S of the battery cell 100. Furthermore, the pressing member may be disposed adjacent to the terrace portion T where the electrode lead is positioned in the sealing portion S of the battery cell 100. The pressing member 300 may be disposed outside the terrace portion T so as to face one surface of the terrace portion T. That is, the surrounding space of the terrace portion T may be filled with the pressing member 300 in the module case 200. For example, the pressing member 300 may be disposed between the terrace portion T (that may be defined as a "first terrace portion") of the battery cell 100 (that may be defined as a "first battery cell") and the terrace portion T (that may be defined as a "second terrace portion") of the battery cell 100 (that may be defined as a "second battery cell") disposed adjacent to the first battery cell.

The pressing member 300 may be disposed to be surrounded by a bus-bar assembly 500, the storage portion R, and the sealing portion S.

According to the above-implemented configuration of the present disclosure, when the internal pressure increases due to an abnormal situation such as thermal runaway occurring in the battery cell 100, venting toward the terrace portion T may be prevented or suppressed.

In particular, there may be more space around the terrace portion T inside the module case 200 than in other areas of the battery cell 100, especially, the area where the storage portion R is located. Therefore, venting gas or flame emitted from the battery cell 100 may be easily concentrated thereon.

Therefore, the terrace portion T may be more vulnerable to thermal chain reaction than other parts in the battery cell 100. However, according to the above-implemented configuration of the present disclosure, even if the internal pressure of the battery cell 100 increases, the terrace portion T is configured to be pressurized by the pressing member 300, so that venting toward the terrace portion T may be suppressed or blocked.

Therefore, according to the above-implemented configuration, the transfer of thermal damage from the battery cell 100 where an event occurs to the adjacent battery cells 100 may be reduced, thereby suppressing thermal propagation between the battery cells 100 and preventing or delaying the thermal runaway of the battery module 10. Therefore, according to the above aspect of the present disclosure, the safety and reliability of the battery module 10 may be improved.

In particular, as shown in the implemented configuration of FIG. 3a, when the front and rear terrace portions T of the battery cell 100 are all pressurized by the pressing members 300, venting may be induced in a direction other than the front and rear directions of the battery module 10. For example, this may be more appropriately applied to top venting in which venting gas is guided to the top of the battery module 10. In addition, as shown in the above-described embodiment in FIG. 3b, if only the front terrace portion T is provided with the pressing member 300 and if the rear terrace portion T is not pressurized by the pressing member 300, directional venting toward the rear (e.g., rear venting) may be induced. Therefore, according to the implemented configuration of the present disclosure, a directional venting structure for venting in a desired direction may be easily implemented through appropriate arrangement of the pressing members 300. Furthermore, another battery module 10 or electrical connection configurations, such as a module terminal or a bus-bar between modules, for connection with another battery module 10 may be disposed on the front side of the battery module 10. However, if the venting to the front is blocked or suppressed as described in the above embodiment, it is possible to prevent or reduce high-temperature gas or flames from moving to another battery module 10 or the electrical connection configurations.

A plurality of pressing members 300 may be provided. The plurality of pressing members 300 may be arranged at regular intervals along the stacking direction of the battery cells 100. The plurality of pressing members 300 may have substantially the same shape. That is, the plurality of pressing members 300 may have substantially the same size and shape, regardless of the arrangement positions, space shapes, or specifications. According to the above embodiment of the present disclosure, mass production or manufacturing of the pressing member 300 may be simplified and easy.

The pressing member 300 may include a first pressing member 310 and a second pressing member 320. The first pressing member 310 may be disposed to face a first surface 111 of the terrace portion T. The second pressing member 320 may be disposed to face a second surface 112 of the terrace portion T on the opposite surface of the first surface 111. Here, the first surface 111 of the terrace portion T may be a surface facing the left direction (e.g., -X-axis direction), and the second surface 112 may be a surface facing the right direction (e.g., +X-axis direction).

That is, the first pressing member 310 and the second pressing member 320 may be positioned on both sides of the terrace portion T. In this configuration, the pressing member 300 may be configured to pressurize the terrace portion T from both sides of the terrace portion T. For example, as indicated by the arrows in FIG. 4b, the first pressing member 310 disposed on the left side of the terrace portion T may pressurize the terrace portion T to the right, and the second pressing member 320 disposed on the right side of the terrace portion T may pressurize the terrace portion T to the left.

In the above configuration, the first pressing member 310 and the second pressing member 320 may be substantially the same shape.

According to the above-implemented configuration of the present disclosure, it is possible to prevent the terrace portion T from being opened toward both sides or moving in one direction by pressing on both sides of the terrace portion T. That is, when the terrace portion T is pressed from both sides as described above, since the terrace portion T is reliably pressurized, the sealing maintenance performance for the terrace portion T may be further improved.

According to an embodiment, the pressing member 300 may be configured to extend in the vertical direction (Z-axis direction) along the terrace portion T. Here, the terrace portion T may indicate a sealing portion S extending in the vertical direction at the front and/or rear of the battery cell 100. In order to prevent gas from venting in the terrace portion T, the pressing member 300 may be configured to extend in the vertical direction along the shape of the terrace portion T and pressurize the entire terrace portion T. For example, the vertical length of the pressing member 300 may be substantially equal to or greater than the vertical length of the terrace portion T. That is, the pressing member may continuously pressurize the entire terrace portion T from the bottom to the top, thereby preventing the entire terrace portion T from being opened or ruptured.

According to the above-implemented configuration of the present disclosure, venting gas or flame may be completely blocked from venting toward the terrace portion T, and the terrace portion T may be more reliably prevented from being ruptured by the pressure of venting gas or flame. For example, in the configuration of FIG. 3b, venting toward the front (-Y-axis direction) of the battery cell may be more reliably prevented.

According to an embodiment, the pressing member 300 may include an insulating or heat-resistant material. For example, the pressing member 300 may include a material having high insulating and/or heat-resistant (including fire-resistant) performance, such as at least one of plastic, rubber, silicon, aerogel, metal, and GFRP (glass fiber reinforced plastic). In addition, the pressing member may include a soft material to prevent damage to the battery cell when coming into contact with the battery cell and increase adhesion. In addition, the pressing member 300 may include a metal material having rigidity and heat resistance in order to physically or chemically prevent the terrace portion T from being ruptured. However, the material of the pressing member 300 is not limited to the above embodiment, and any material may be applied as long as it exhibits a predetermined insulation performance or heat resistance performance.

According to the above-implemented configuration of the present disclosure, the heat or flame blocking performance of the terrace portion T may be more stably secured. More specifically, according to the above configuration, the venting gas or flame may be effectively blocked by the pressing member 300, having the insulation or heat resistance performance, from moving to other battery cells 100 in the space around the terrace portion T.

In particular, the sealing portion S (e.g., the terrace portion T) of the battery cell 100 is a fused portion that may have lower durability against high temperature, pressure, flame, or the like, compared to the storage portion R of the battery cell 100. However, according to the above embodiment of the present disclosure, since the terrace portion T of the battery cell 100 is protected by the pressing member 300, it is possible to prevent the terrace portion T from being affected by venting gas or flames discharged from other battery cells 100. Therefore, it is possible to effectively prevent propagation of thermal runaway between the battery cells 100 inside the battery module 10. In addition, since it has heat resistance performance, even if high-temperature venting gas or flames are discharged, the structural rigidity may be maintained and the function of pressurizing the terrace portion T may remain. The structure and shape of the pressing member 300 will be described in detail below.

The battery module according to the present disclosure may further include a bus-bar assembly 500 illustrated in FIG. 2. The bus-bar assembly 500 may be configured to connect electrode leads 120 of a plurality of battery cells 100 to each other. More specifically, the bus-bar assembly 500 may be configured to support the electrode leads 120, facilitate the interconnection of the electrode leads 120, and enable sensing of voltage from the electrode leads 120. In particular, the bus-bar assembly 500 may include a module bus-bar 510 and a bus-bar housing 520, as illustrated in FIG. 2.

Here, the module bus-bar 510 may be configured to electrically connect two or more electrode leads 120, or to be connected to one or more electrode leads 120 so as to transmit sensing information to a control unit such as a BMS (battery management system).

In addition, the bus-bar housing 520 may be made of an electrically insulating material, such as a plastic material. In addition, the bus-bar housing 520 may be configured such that the module bus-bar 510 is seated on and fixed to the same. In this case, at least one surface of the pressing member 300 may be positioned to face the inner surface of the bus-bar housing 520. Furthermore, the bus-bar housing 520 may have a slit formed thereon. In addition, the module bus-bar 510 may be attached to the outer surface of the bus-bar housing 520, for example, the front side thereof. In this case, the electrode lead 120 may pass through the slit of the bus-bar housing 520 and come into contact with the module bus-bar 510 located on the outer surface. In particular, a single electrode lead 120 or two or more electrode leads 120 stacked on each other may be fixed to the module bus-bar 510. In this case, the coupling between the electrode lead 120 and the module bus-bar 510 may be performed by laser welding or ultrasonic welding, but various other coupling methods may also be applied.

According to an embodiment of the present disclosure, the pressing member 300 may prevent the fused portion of the sealing portion S (e.g., the terrace portion T) from being opened due to the internal pressure of the battery cell 100, thereby minimizing the seal breakdown of the sealing portion S (e.g., the terrace portion T). Therefore, it is also possible to prevent damage to the bus-bar assembly 500 disposed outside the sealing portion S (e.g., the terrace portion T) and various components included therein.

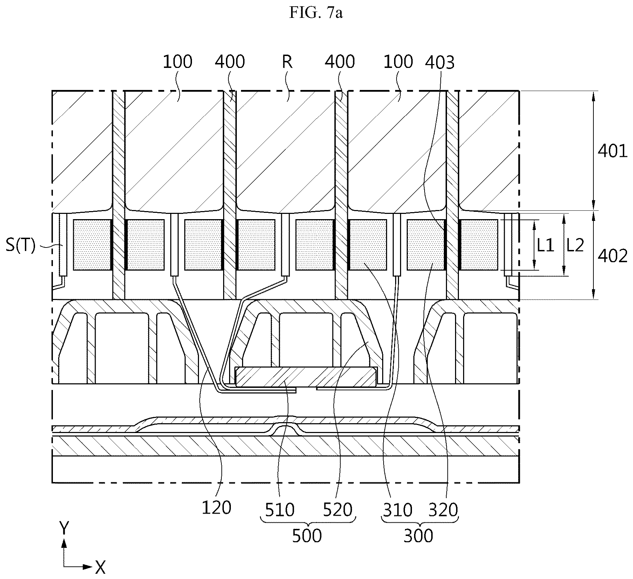

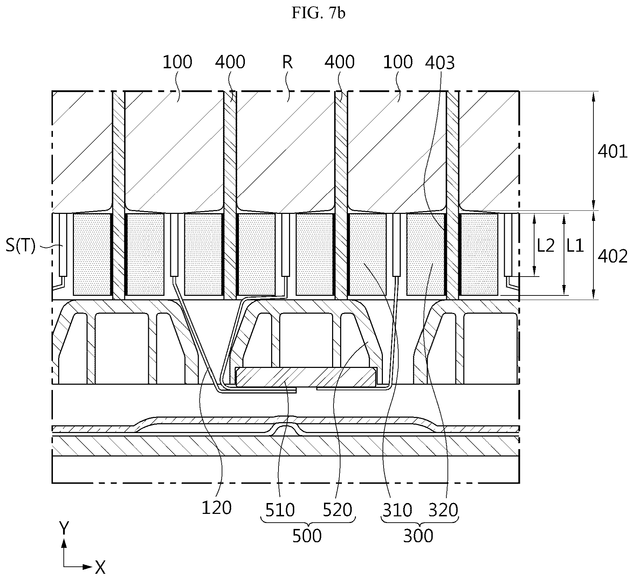

FIG. 6 is a cross-sectional view schematically illustrating a partial configuration of a battery module 10 according to another embodiment of the present disclosure, which may show, for example, a cross-sectional configuration taken along line A1 - A1' in FIG. 1. FIG. 7a is an enlarged view of part A2 in FIG. 6 according to an embodiment of the present disclosure. FIG. 7b is an enlarged view of part A2 in FIG. 6 according to another embodiment of the present disclosure. The embodiments in FIGS. 6 to 7b may be partially combined with the embodiments in FIGS. 1 to 5.

According to an embodiment, the battery module 10 according to the present disclosure may further include a barrier 400. The barrier 400 may be disposed between adjacent battery cells 100 or between the battery cell 100 and the module case 200. For example, the barrier 400 may be a plate arranged in the vertical direction. That is, in the state where the battery cells 100 are stacked in at least one direction, the barrier 400 may be interposed between the battery cells 100 of the stack. For example, referring to the configuration in FIG. 6, in the state where a plurality of battery cells 100 are stacked along the X-axis direction, the barrier 400 may be inserted between adjacent battery cells 100. One or more barriers 400 may be provided in each battery module 10. In particular, in the case where three or more battery cells 100 are included, multiple barriers 400 may be provided such that each barrier 400 is interposed between every pair of battery cells 100.

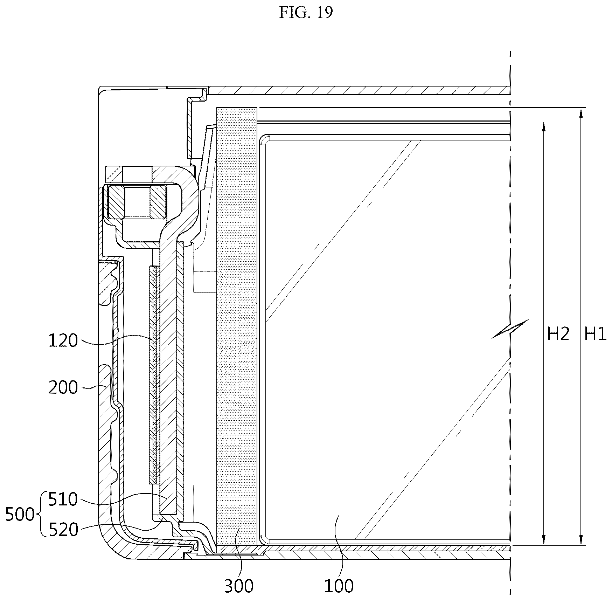

The barrier 400 may be configured to suppress heat, flame, pressure, impact, or the like from being transmitted between the battery cells 100. For example, the barrier 400 may be a thermal barrier configured to block heat or flame from being transmitted between the battery cells 100. Alternatively, the barrier 400 may be a compression pad configured to absorb pressure or shape change due to swelling between the battery cells 100. The barrier 400 according to the present disclosure may employ various components interposed between the battery cells 100 in a conventional battery module 10 or battery pack (e.g., the battery pack 1 in FIG. 19).

In particular, the barrier 400 may be interposed between storage portions R of adjacent battery cells 100. That is, as described above, each battery cell 100 may have a storage portion R in its central portion, and the barrier 400 may be interposed between the storage portions R of the adjacent battery cells 100 so as to face the storage portions R of the battery cells 100.

According to an embodiment, the barrier 400 interposed between the storage portions R of adjacent battery cells 100 may have an end protruding therefrom and extending to the space between the sealing portions S, particularly the terrace portions T, of the adjacent battery cells 100. For example, referring to FIG. 7, the barrier 400 may include a first portion 401 interposed between the storage portions R of the battery cells 100, and a second portion 402 extending from the first portion 401 to the space between the sealing portions S. For example, the second portion 402 may be configured to protrude and extend toward the terrace portion T where the electrode lead 120 is located, in the sealing portion S of the battery cells 100. For example, the second portion 402 may be configured to be in contact with the bus-bar housing 520 perpendicularly thereto. According to an embodiment, the pressing member 300 may be positioned between the terrace portion T of the battery cell 100 and the barrier 400.

Meanwhile, the barrier 400 may be configured such that at least one end thereof is in contact with the bus-bar assembly 500. For example, referring to FIG. 7a, the front end of the barrier 400 may be in direct contact with the inner (rear) surface of the bus-bar assembly 500 located in front of the plurality of battery cells 100. In particular, the barrier 400 may be in contact with the inner surface of the bus-bar housing 520 provided in the bus-bar assembly 500.

According to the above-implemented configuration of the present disclosure, the safety of the battery module 10 may be further improved. More specifically, if high-temperature venting gas or flame is emitted from the battery cell 100, it is possible to effectively block the venting gas or flame from affecting other nearby battery cells 100. In particular, the sealing portion S of the battery cell 100, which is a fused portion, may have lower durability against high temperature, pressure, flame, or the like, compared to the storage portion R of the battery cell 100.

However, according to the above aspect of the present disclosure, since the sealing portion S of the battery cell 100 is protected by the protruding second portion 402 of the barrier 400, it may be prevented from being affected by venting gas or flame emitted from other battery cells 100. Therefore, it is possible to effectively prevent propagation of thermal runaway between the battery cells 100 inside the battery module 10.

According to an embodiment, referring to FIG. 7a, the front-back length L1 of the pressing member 300 may be shorter than the front-back length L2 of the terrace portion T. The pressing member 300 may be configured to pressurize the center of the terrace portion T in the front-back direction (Y-axis direction). The center of the pressing member 300 in the front-back direction (Y-axis direction) may substantially match the center of the terrace portion T in the front-back direction (Y-axis direction). According to the above embodiment of the present disclosure, the pressing member 300 may be configured to intensively pressurize the fused (sealed) portion of the sealing portion S (e.g., the terrace portion T).

According to another embodiment, referring to FIG. 7b, the front-back length L1 of the pressing member 300 may be greater than the front-back length L2 of the terrace portion T. The pressing member 300 may be configured to pressurize the terrace portion T and the electrode lead 120. According to the above embodiment of the present disclosure, the pressing member 300 may pressurize the electrode lead 120, as well as the fused (sealed) portion of the sealing portion S (e.g., the terrace portion T), to fix the position of the electrode lead 120, so the electrode lead 120 may be protected from being cut or impacted by venting gas or flame. However, the size of the pressing member 300 is not limited to the above embodiment, and may be variously designed.

According to an embodiment, the pressing member 300 may be attached to one surface of the barrier 400. For example, the pressing member 300 may be attached to the second portion 402 of the barrier 400. According to the above-implemented configuration of the present disclosure, the pressing member 300 may be attached to the barrier 400, so that the fixing force of the pressing member 300 may be further improved. According to an embodiment, the battery module 10 according to the present disclosure may further include an adhesive member 403 disposed between the pressing member 300 and the barrier 400. That is, the pressing member 300 may be bonded to the barrier 400. In addition, the pressing member 300 may be fixed to the barrier in various other fastening methods.

The barrier 400 may include a left side (e.g., one side facing the -X-axis direction) and a right side (e.g., one side facing the +X-axis direction). In this case, one pressing member 300 may be attached to the left side of the barrier 400, and another pressing member 300 may be attached to the right side. That is, the barrier 400 may have pressing members 300 attached to both sides.

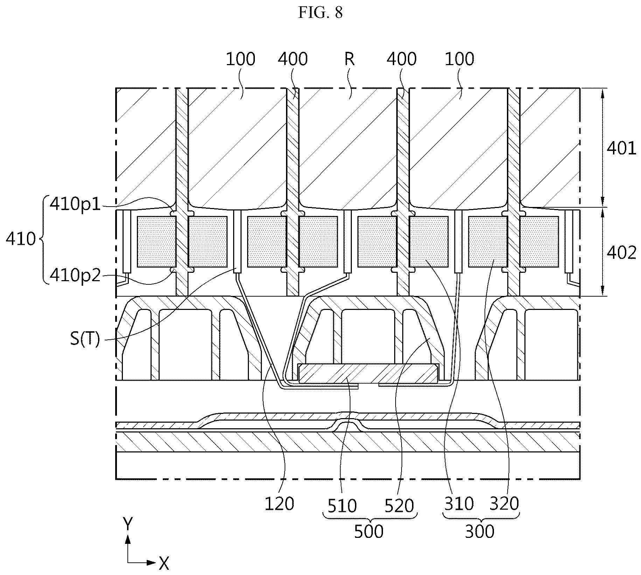

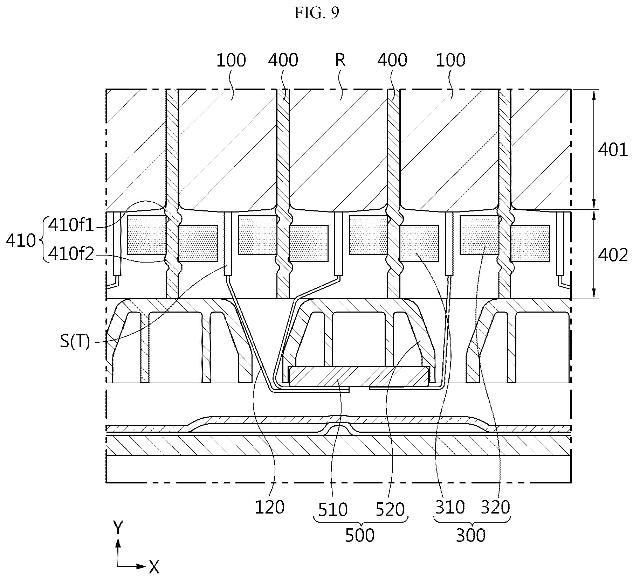

FIG. 8 is a cross-sectional view schematically illustrating a partial configuration of a battery module 10 including a barrier 400 according to another embodiment of the present disclosure. FIG. 9 is a cross-sectional view schematically illustrating a partial configuration of a battery module 10 including a barrier 400 according to another embodiment of the present disclosure. The embodiments in FIGS. 8 and 9 may be partially combined with the embodiments described above, such as the embodiments in FIGS. 6 and 7b.

The barrier 400 may further include a coupling portion 410. The coupling portion 410 may be configured so that the pressing member 300 may be coupled and/or inserted thereto. In particular, the coupling portion 410 may be configured to fix the position of the pressing member 300 and support the pressing member 300.

The coupling portion 410 may be formed on at least one surface of the barrier 400. For example, the coupling portion 410 may be formed on both the left and right sides of the barrier 400.

Referring to the embodiment in FIG. 8, the coupling portion 410 may be configured as at least one protrusion.

Furthermore, the barrier 400 may have a plurality of coupling portions 410p1 and 410p2 spaced a predetermined distance apart from each other in the longitudinal direction. In addition, the pressing member 300 may be positioned between the plurality of coupling portions 410p1 and 410p2. For example, the coupling portion 410 may include a front protrusion 410p2 and a rear protrusion 410p 1 formed at positions corresponding to the front and/or rear ends of the pressing member 300, respectively. In this case, the pressing member 300 may be inserted between the front protrusion 410p2 and the rear protrusion 410p1 and fixed in position. In particular, the coupling portion 410 may be configured in position and/or shape such that the pressing member 300 may be fitted thereto.

According to the above-implemented configuration of the present disclosure, the pressing member 300 may be fixed to the barrier 400 without a separate fastening member such as an adhesive, thereby facilitating coupling and/or assembly.

Referring to the embodiment in FIG. 9, the coupling portion 410 may have at least one curved portion (curved part). In particular, the barrier 400 may be formed to extend long in the front-back direction, and the coupling portion 410 may be configured such that a portion thereof is bent in the left direction (-X-axis direction) and/or the right direction (+X-axis direction).

Furthermore, the barrier 400 may have a plurality of coupling portions 410f1 and 410f2 disposed along the longitudinal direction. For example, the coupling portion 411 may extend in the front-back direction so as to bent in the left direction (-X-axis direction) first and then bend in the right direction (+X-axis direction). More specifically, the coupling portion 410 may include a front curved portion 410f2 and a rear curved portion 410f1 formed at positions corresponding to the front and/or rear ends of the pressing member 300, respectively. The pressing member 300 may be inserted between the front curved portion 410f2 and the rear curved portion 410f1 and fixed in position. That is, the second pressing member 320, located on the left side of the barrier 400, may be inserted between the portions bent in the left direction (-X-axis direction), among the front curved portion 410f2 and the rear curved portion 410f1, and fixed in position. The first pressing member 310, located on the right side of the barrier 400, may be inserted between the portions bent in the right direction (+X-axis direction), among the front curved portion 410f2 and the rear curved portion 410f1, and fixed in position.

According to the above-implemented configuration of the present disclosure, since the curved portion is able to be produced by applying pressure to a single plate, the barrier 400 may be easily manufactured, and since the pressing member 300 is able to be fixed to the barrier 400 without a separate fastening member such as an adhesive, it may be easily combined and/or assembled.

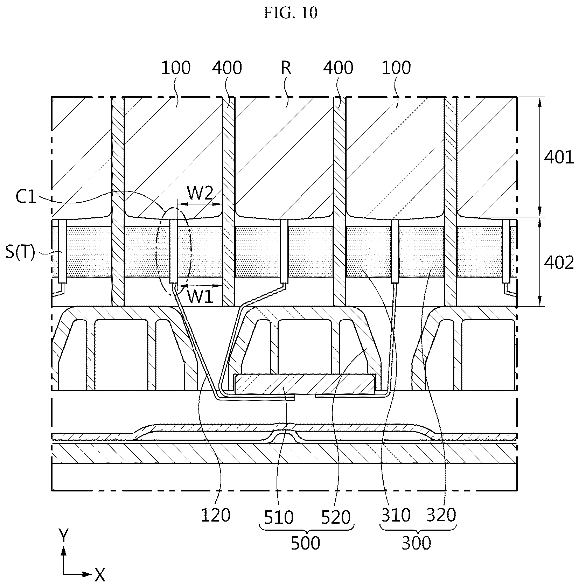

FIG. 10 is a cross-sectional view schematically illustrating a partial configuration of a battery module 10 according to an embodiment of the present disclosure. The embodiment in FIG. 10 may be partially combined with the embodiments described above such as the embodiments in FIG. 8 and FIG. 9.

The pressing member 300 may be configured to be in contact with at least one surface of the terrace portion T. The pressing member 300 may be in close contact with at least one surface of the terrace portion T. In this case, the pressing member 300 may be configured to consistently pressurize and/or compress the terrace portion T. That is, even if no thermal event occurs in the battery cell 100, the pressing member 300 may be configured to be in contact with the terrace portion T and consistently pressurize the terrace portion T to a certain level or higher. For example, referring to part C1 in FIG. 10, the pressing member 300 may be attached to at least one surface of the terrace portion T. For example, before the pressing member 300 is interposed between the barrier 400 and the terrace portion T, the length W1 of the pressing member 300 in the left-right direction (X-axis direction) may be substantially equal to or greater than the length W2 between the barrier 400 and the terrace portion T.

According to the above-implemented configuration of the present disclosure, even in a normal state, the pressing member 300 may pressurize the terrace portion T, so that the pressurization of the terrace portion T may be already performed from the initial stage of thermal runaway. Therefore, the terrace portion T may be more reliably prevented from being separated, thereby completely blocking the venting gas or the like from escaping through the terrace portion T. In addition, even in a normal state where thermal runaway does not occur, the terrace portion T may be pressurized, so that the position of the terrace portion T of each battery cell 100 may be more stably fixed, and the movement of the battery cell 100 may be prevented.

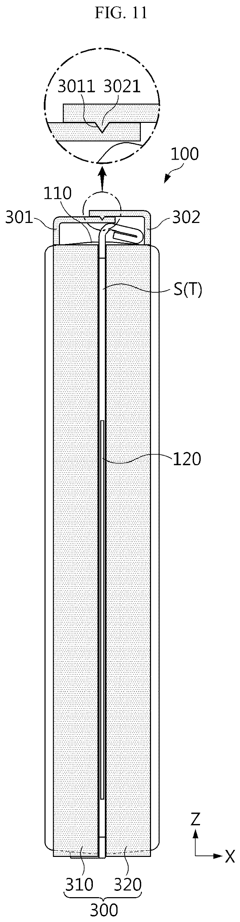

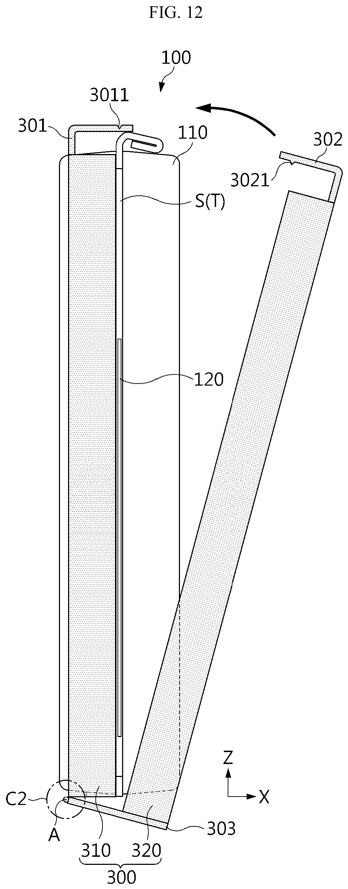

FIG. 11 is a side view schematically illustrating a battery module 10 according to an embodiment of the present disclosure. FIG. 12 is a side view schematically illustrating a battery module 10 according to another embodiment of the present disclosure. The embodiments in FIGS. 11 and 12 may be partially combined with the embodiments described above, such as the embodiment in FIG. 10.

According to an embodiment, a first pressing member 310 and a second pressing member 320 may be configured to be coupled to each other. For example, the first pressing member 310 and the second pressing member 320 may be coupled to each other at the ends. In particular, the first pressing member 310 and the second pressing member 320 may be coupled to each other and fixed at the top and bottom.

According to this implemented configuration, the relative positions of the first pressing member 310 and the second pressing member 320 are fixed, thereby improving the coupling and assembly properties between the battery cell 100 and the pressing member 300. In this case, the width between the first pressing member 310 and the second pressing member 320 may be maintained constant.

According to the above-implemented configuration of the present disclosure, the coupling of the first pressing member 310 and the second pressing member 320 may prevent the terrace portion T disposed between the first pressing member 310 and the second pressing member 320 from being separated or opened by the first pressing member 310 and the second pressing member 320. Specifically, it is possible to effectively prevent or delay the breakdown of the terrace portion T by the venting gas or flame discharged through the relatively vulnerable part of the terrace portion T.

According to an embodiment, at least one of the first pressing member 310 or the second pressing member 320 may include fastening portions 301 and 302. The fastening portions of the respective pressing members 310 and 320 may be configured to extend toward each other to shorten the distance between them.

The first pressing member 310 may include a first fastening portion 301. The first fastening portion 301 may extend toward the second pressing member 320. In this case, the second pressing member 320 may be coupled to the first fastening portion 301 of the first pressing member 310.

In addition, the second pressing member 320 may include a second fastening portion 302. The second fastening portion 302 may extend toward the first pressing member 310. In this case, the first pressing member 310 may be coupled to the second fastening portion 302 of the second pressing member 320.

More specifically, referring to FIG. 11, the first pressing member 310 and the second pressing member 320 may be disposed on left and right sides of the terrace portion T of the battery cell 100. In this case, the first pressing member 310 may be disposed on the left side of the terrace portion T and may include the first fastening portion 301 at an end. The first fastening portion 301 may extend from the end of the first pressing member 310 toward the second pressing member 320, that is, in the right direction (e.g., the +X-axis direction in FIG. 11). In addition, the second pressing member 320 may be disposed on the right side of the terrace portion T and may include the second fastening portion 302 at an end. The second fastening portion 302 may be configured to extend in the left direction (e.g., the -X-axis direction in FIG. 11) toward the first pressing member 310 so as to be coupled to the first fastening portion 301. That is, the first fastening portion 301 and the second fastening portion 302 may be configured to be coupled to each other, thereby implementing the coupling between the first pressing member 310 and the second pressing member 320.

In this case, the second fastening portion 302 may include a protrusion 3021 protruding toward the first fastening portion 301, and the first fastening portion 301 may include a concave portion 3011 corresponding to the protrusion 3021 and configured to be coupled with the protrusion 3021. According to the above-implemented configuration of the present disclosure, the first pressing member 310 and the second pressing member 320 may be coupled to and separated from each other depending on the fastening portions. However, the method of coupling the first pressing member 310 and the second pressing member 320 is not limited to the above embodiment and may be variously designed.

For example, referring to FIG. 11, the first fastening portion 301 and/or the second fastening portion 302 may be provided at the upper ends (e.g., in the +Z-axis direction in FIG. 11) of the first pressing member 310 and/or the second pressing member 320.

According to the above embodiment of the present disclosure, the fastening portions 301 and 302 provided at the upper ends may surround at least a portion of the sealing portion S protruding upward, thereby protecting the sealing portion S. In addition, the fastening portion 301 and 302 may be disposed in the protruding direction of the sealing portion S to increase space utilization.

However, the positions of the fastening portions are not limited to the above embodiment, and they may be provided on at least one of the upper ends, lower ends, left ends, and right ends of the first pressing member 310 and the second pressing member 320.

Referring to FIG. 12, the fastening portion may further include a hinge fastening portion 303. The hinge fastening portion 303 may be configured so that the first pressing member 310 and the second pressing member 320 may rotate relative to each other around a hinge. For example, the hinge fastening portion 303 may have one end coupled to the first pressing member 310 so as to hinge-rotate, as indicated by C2 in FIG. 12. In addition, the hinge fastening portion 303 may have the other end (e.g., the right end in FIG. 12) coupled to the second pressing member 320.

In particular, the hinge fastening portion 303 may have a right portion fixed to the second pressing member 320 and a left portion extending toward the first pressing member 310. In addition, the left end of the extending portion of the hinge fastening portion 303 may have a hinge axis A and may be coupled to the first pressing member 310 so as to hinge-rotate. For example, the hinge fastening portion 303 may be coupled to the lower surface of the second pressing member 320 so as to extend from the lower surface of the second pressing member 320 toward the lower surface of the first pressing member 310, and the end of the extending portion may be coupled to the lower surface of the first pressing member 310 so as to hinge-rotate. In this case, the first pressing member 310 and the second pressing member 320 may be connected through the hinge fastening portion 303, and the second pressing member 320 may hinge-rotate to be fixed in parallel to the first pressing member 310.

For example, the hinge fastening portion 303 may be coupled to the bottoms of the first pressing member 310 and the second pressing member 320, and the first fastening portion 301 and/or the second fastening portion 302 may be coupled to the tops of the first pressing member 310 and/or the second pressing member 320. In this case, the first pressing member 310 and the second pressing member 320 are connected through the hinge fastening portion 303, and the first fastening portion 301 and/or the second fastening portion 302 may be fastened so that the second pressing member 320 hinge-rotates and is fixed in parallel to the first pressing member 310.

Since the first pressing member 310 and the second pressing member 320 are connected through the hinge fastening portion 303, assembly is relatively easy, and storage may be easy even when the assembly is disassembled.

However, the fastening portions are not limited to the above embodiment or the above shape, and may be designed to various shapes such as a protruding shape, a concave shape, a hook shape, and a hole formed.

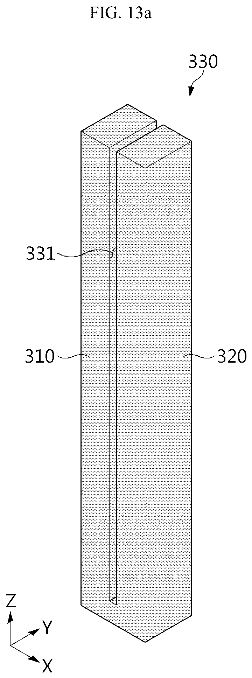

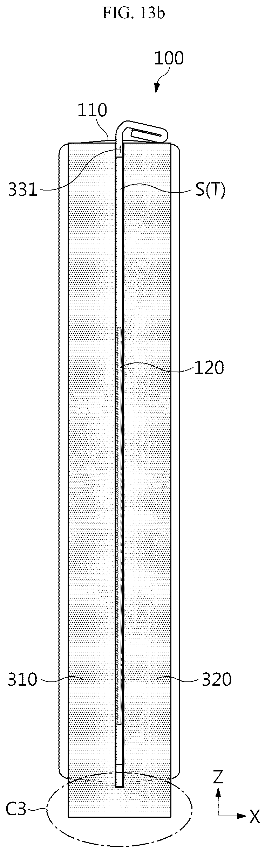

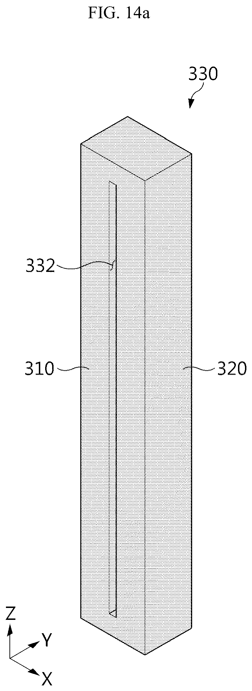

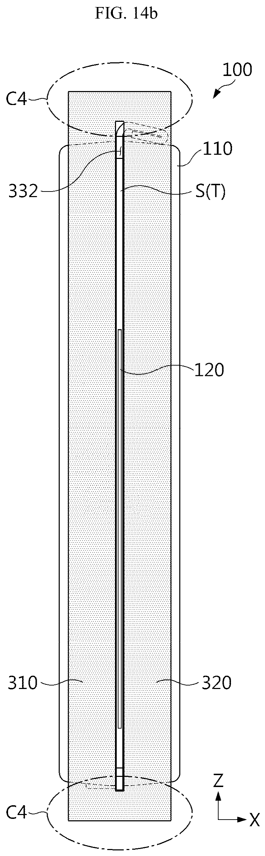

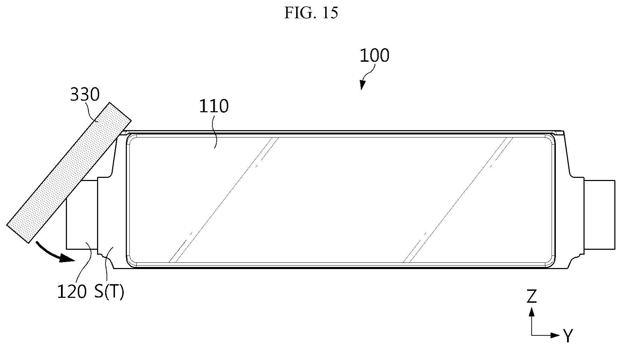

FIG. 13a is a perspective view schematically illustrating a pressing member 330 according to another embodiment of the present disclosure. FIG. 13b is a side view schematically illustrating a partial configuration of a battery module 10 including a pressing member 330 according to another embodiment of the present disclosure. FIG. 14a is a perspective view illustrating a pressing member 330 according to another embodiment of the present disclosure. FIG. 14b is a side view schematically illustrating a partial configuration of a battery module 10 including a pressing member 330 according to another embodiment of the present disclosure. FIG. 15 is a schematic view illustrating an assembly of a pressing member 330 with a battery cell according to another embodiment of the present disclosure.

Referring to FIGS. 13a to 15, the first pressing member 310 and the second pressing member 320 may be formed integrally. In this case, the battery module 10 according to an embodiment of the present disclosure may include an integral pressing member 330. The embodiments in FIGS. 13A to 15 may be partially combined with the embodiments described above, such as the embodiments in FIGS. 11 and 12.

In this embodiments, the first pressing member 310 and the second pressing member 320 may be formed integrally when manufacturing the same, instead of separate members to be coupled to each other. The integral pressing member 330 may be configured to cover the front or rear surface of the battery cell 100.

According to an embodiment, a recess 331 may be formed in the integral pressing member 330 so that the terrace portion T may pass therethrough. The recess 331 may be a portion where the first pressing member 310 and the second pressing member 320 are not coupled to each other. For example, referring to part C3 in FIG. 13b, the first pressing member 310 and the second pressing member 320 may be configured integrally with their lower ends coupled to each other. In this case, the portion where the first pressing member 310 and the second pressing member 320 are not coupled to each other may be the recess 331. That is, the recess 331 may be a gap of a predetermined distance between the first pressing member 310 and the second pressing member 320 arranged in the left-right direction and spaced apart from each other. Furthermore, in the implemented configuration of FIG. 13b, the recess 331 may be configured by cutting the central part of the integral pressing member 330 downward from the top by a predetermined distance. In this case, the integral pressing member 330 may be formed similarly to a "U"-shaped plate.

In addition, for example, although not shown in the drawing, the recess 331 may be configured by cutting the central part of the integral pressing member 330 upward from the bottom by a predetermined distance. In this case, the integral pressing member 330 may be formed similarly to an "n"-shaped plate.

According to an embodiment, referring to FIG. 14a, the integral pressing member 330 may have a hole 332 configured such that the terrace portion T may pass therethrough. The hole 332 may be surrounded by the integral pressing member 330 on the upper side, lower side, left side, and right side. For example, referring to part C4 in FIG. 14b, the first pressing member 310 and the second pressing member 320 may be configured in an integral form in which the upper ends and the lower ends are coupled to each other. In this case, the central portion where the first pressing member 310 and the second pressing member 320 are not coupled to each other may be the hole 332.

In this case, the fixing force between the pressing member 330 and the battery cell 100 may be further strengthened, thereby more effectively preventing the terrace portion T from moving upward or downward. In addition, the position of the battery cell 100 may be more easily fixed.

Meanwhile, referring to FIG. 15, the terrace portion T may be inserted into and may pass through the slit-shaped recess 331 or hole 332, so that the integrated pressing member 330 may be coupled to the battery cell 100. According to the above-mentioned implemented configuration of the present disclosure, the rigidity of the integrated pressing member 330 may be further improved, and the fixing force between the integrated pressing member and the battery cell may be strengthened. In addition, the manufacturing and assembly of the battery module may be simplified, and it is possible to more reliably prevent the terrace portion T from being opened when the battery cell experiences thermal runaway.

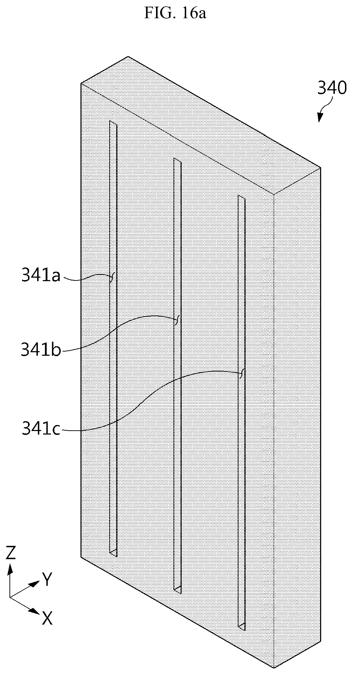

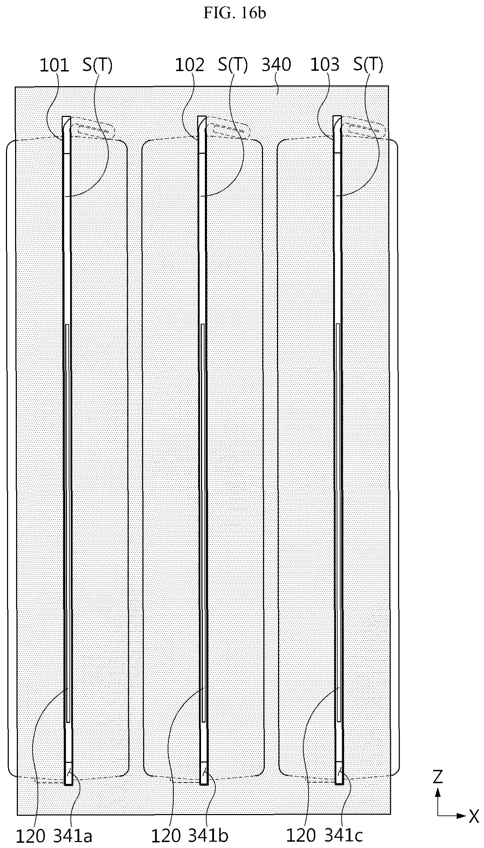

FIG. 16a is a perspective view illustrating a pressing member according to another embodiment of the present disclosure. FIG. 16b is a side view schematically illustrating a partial configuration of a battery module according to another embodiment of the present disclosure.

Referring to FIGS. 16A and 16B, a plurality of pressing members may be configured, and at least two of the pressing members may be formed integrally. In this case, the battery module 10 according to an embodiment of the present disclosure may include an aggregate pressing member 340. The embodiments in FIGS. 16A and 16B may be partially combined with the embodiments in FIGS. 13 to 15.

That is, according to an embodiment, the battery module 10 may have a plurality of adjacent pressing members 300 formed integrally and coupled to a plurality of adjacent battery cells 100. In the present embodiment, the plurality of adjacent pressing members may be formed integrally when manufacturing the same, instead of separate members to be combined with each other. The aggregate pressing member 340 may be configured to cover the front or back side of the battery cell 100.

For example, referring to FIG. 16b, the battery module 10 may include a first battery cell 101, a second battery cell 102, and a third battery cell 103 arranged side by side. In this case, the aggregate pressing member 340 may be configured to cover the first battery cell 101, the second battery cell 102, and the third battery cell 103 overall. That is, a pressing member coupled to the first battery cell 101, a pressing member coupled to the second battery cell 102, and a pressing member coupled to the third battery cell 103 may be formed as one plate. In this case, one aggregate pressing member is configured to pressurize both the left and right sides of the respective terrace portions of the plurality of battery cells.

In the above-implemented configuration, the length of the aggregate pressing member 340 in the width direction (X-axis direction) may increase in proportion to the number of battery cells 100 to be covered. For example, referring to FIG. 16a, the aggregate pressing member 340 may have a plurality of holes (or recesses) 341a, 341b, and 341c formed to cover the plurality of battery cells 100.

The aggregate pressing member 340 configured above to cover the plurality of battery cells 100 may be easy to assemble and detach, may be relatively rigid, and may have enhanced fixing force.

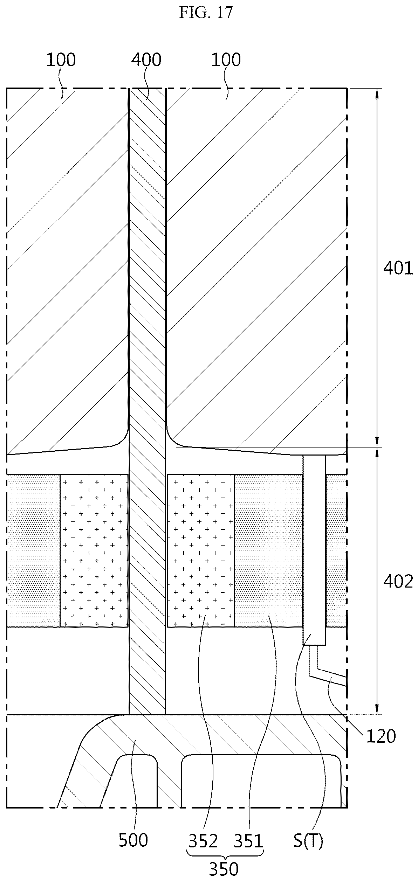

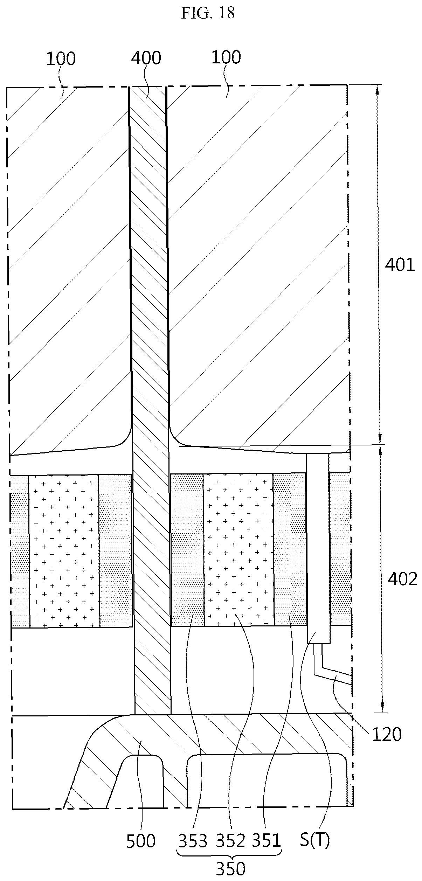

FIG. 17 is a cross-sectional view schematically illustrating a partial configuration of a battery module 10 including a pressing member according to another embodiment of the present disclosure. FIG. 18 is a cross-sectional view schematically illustrating a partial configuration of a battery module 10 including a pressing member according to another embodiment of the present disclosure.

Referring to FIG. 17 and FIG. 18, the pressing member may have a composite layer including different materials. In this case, the battery module 10 according to an embodiment of the present disclosure may include a multi-layered pressing member 350.

The multi-layered pressing member 350 may be comprised of a plurality of layers. The multi-layered pressing member 350 may include a first pressing layer 351 including a first material, and a second pressing layer 352 including a second material different from the first material. The first pressing layer 351 may be disposed to face the terrace portion T, and the second pressing layer 352 may be disposed to face the barrier 400. For example, the first material and the second material may be different in hardness. For example, the first material and the second material may be different in elasticity. In this case, the first material of the first pressing layer 351 facing the terrace portion T may have a lower hardness than the second material of the second pressing layer 352.

According to the above-implemented configuration of the present disclosure, the first pressing layer 351 facing the terrace portion T is configured as a material having a lower hardness than that of the second pressing layer 352, so that, in the case of swelling in which the battery cell 100 expands to a certain level or more, it may be compressed to absorb or allow the swelling of the battery cell 100 to some extent. However, since the second pressing layer 352 has a higher hardness than the first pressing layer 351, swelling of the battery cell 100 may be restricted. Therefore, when a thermal event occurs in the battery cell 100, the terrace portion T of the battery cell 100 may be prevented from being completely opened.

According to another embodiment, referring to FIG. 18, the pressing member 300 may further include a third pressing layer 353 including a third material different from the second material. For example, the first pressing layer 351 and the third pressing layer 353 may be positioned to face adjacent terrace portions T or barriers 400, respectively. For example, the third material may have a different hardness from the second material. For example, the third material may have a different elasticity from the second material. For example, the first material and the third material may be different materials, or may be substantially the same material. According to an embodiment, the first pressing layer 351 and the third pressing layer 353 may have a lower hardness than the second pressing layer 352.

According to the above-implemented configuration of the present disclosure, the first pressing layer 351 and the third pressing layer 353, constituting the outer surfaces, are formed of materials having a lower hardness than the second pressing layer 352 located in the center, thereby allowing swelling in which the battery cell 100 expands to a certain level or more and preventing the terrace portion T of the battery cell 100 from being opened when a thermal event occurs in the battery cell 100.

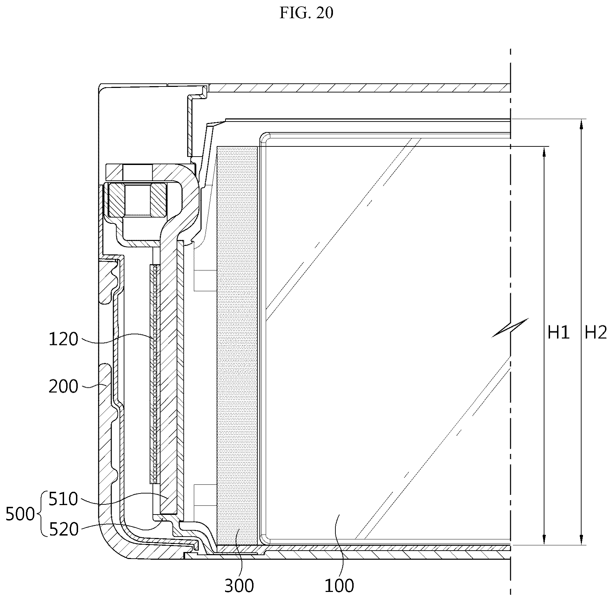

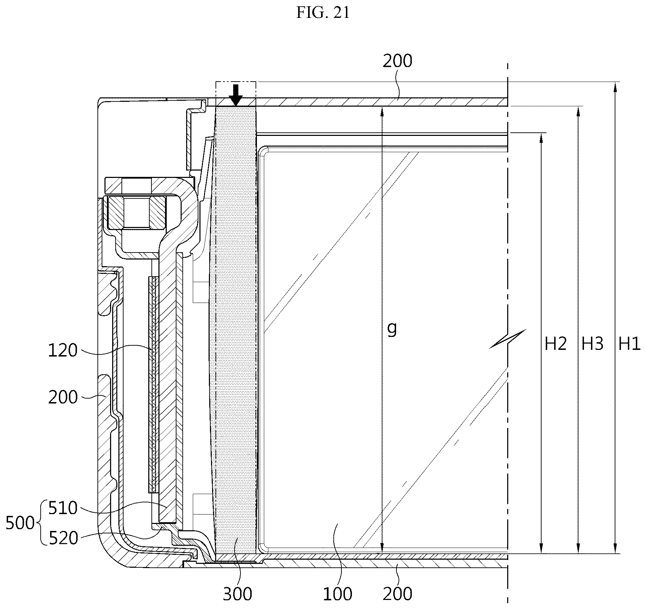

FIG. 19 is a side cross-sectional view of a battery module 10 according to an embodiment of the present disclosure. FIG. 20 is a side cross-sectional view of a battery module 10 according to another embodiment of the present disclosure. FIG. 21 is a side cross-sectional view of a battery module 10 according to another embodiment of the present disclosure.

According to an embodiment, referring to FIG. 19, the vertical height H1 of the pressing member 300 may be greater than the vertical height H2 of the battery cell 100. According to the above-implemented configuration of the present disclosure, since entire area of the battery cell 100 may be pressurized in the vertical direction, it is possible to reliably prevent any part of the terrace portion T from being ruptured.

According to another embodiment, referring to FIG. 20, the vertical height H1 of the pressing member 300 may be less than the vertical height H2 of the battery cell 100. According to the above-implemented configuration of the present disclosure, the central portion of the terrace portion T, which is likely to rupture in the battery cell 100, may be intensively pressurized to effectively prevent rupture of the terrace portion T.

According to another embodiment, referring to FIG. 21, the vertical height H1 of the pressing member 300 may be configured to be greater than the distance g between the upper plate and the lower plate of the module case 200. That is, the pressing member 300 may be pressed in the vertical direction by the upper plate and the lower plate of the module case 200. The vertical height of the pressing member 300 may be reduced from the height H1 before being pressed to the height H3 after being pressed. The height H3 of the pressing member 300 after being pressed may be substantially the same as the distance g between the upper plate and the lower plate of the module case 200. According to the above-implemented configuration of the present disclosure, the position of the pressing member 300 may be stably fixed by being pressed by the upper plate and the lower plate of the module case 200, and may not move by external impact. Therefore, even if an external impact or thermal runaway occurs, the position of the pressing member 300 may remain and pressurize the terrace portion T.

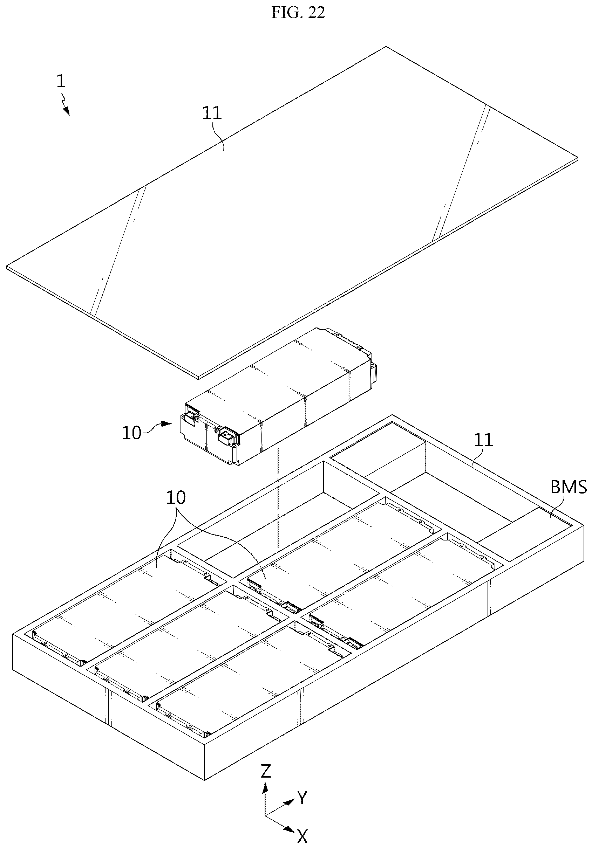

FIG. 22 is an exploded perspective view schematically illustrating a battery pack 1 including a battery module 10 according to an embodiment of the present disclosure.

Referring to FIG. 22, the battery pack 1 according to an embodiment of the present disclosure may include one or more battery modules 10 according to an embodiment of the present disclosure described above. In addition, the battery pack 1 according to the present disclosure may further include various other components, in addition to the battery module 10 according to the present disclosure. For example, the battery pack 1 according to the present disclosure may further include components of the battery pack 1 known at the time of filing the present disclosure, such as a BMS (Battery Management System), a bus-bar, a relay, a current sensor, or the like.

In addition, the battery pack 1 according to the present disclosure may further include a pack case 11, as indicated in FIG. 22. This pack case 11 may provide a space in which a battery module 10 according to the present disclosure may be stored. In particular, in the case where a plurality of battery modules 10 are included in the battery pack 1, the pack case 11 may be partitioned by cross-beams into spaces for storing the plurality of battery modules 10.

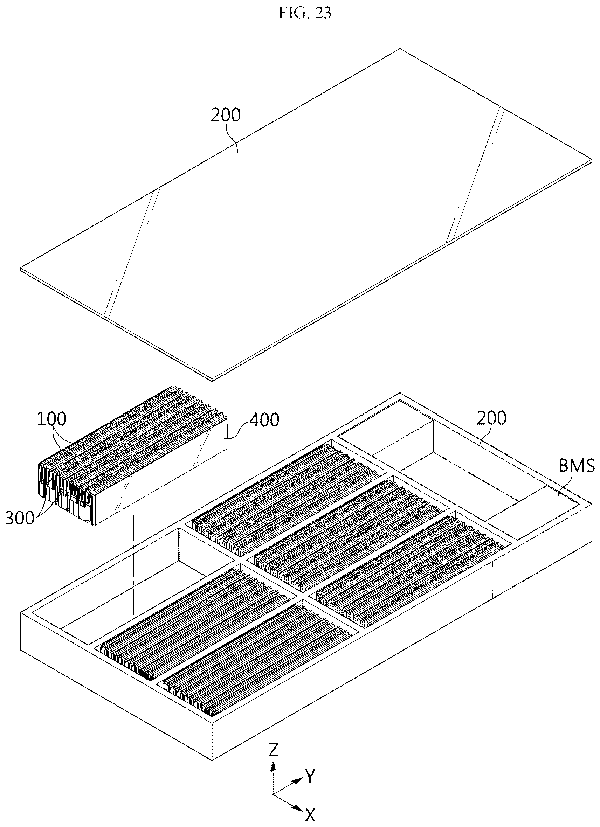

FIG. 23 is a perspective view schematically illustrating the configuration of a battery pack according to another embodiment of the present disclosure.

Referring to FIG. 23, a battery pack 10 according to the present disclosure may include a battery module 10 according to the present disclosure, and may be configured such that the module case 200 of the battery module functions as a pack case, excluding the pack case. In this case, components of the battery pack, such as a BMS, a bus-bar, or a relay, may be disposed inside the module case 200. This type of battery pack is also called a cell-to-pack (CTP) type in which the battery cell 100 is directly stored in the pack case. These days, the active development of the CTP-type battery pack 1 is underway, and the present disclosure may also be applied to the CTP-type battery pack 1.

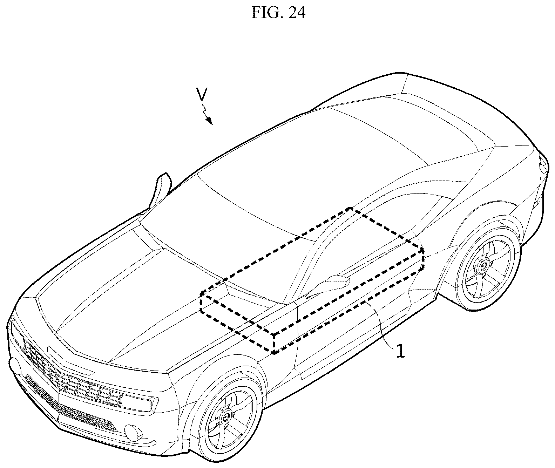

FIG. 24 is a perspective view schematically illustrating a vehicle V including a battery pack 1 according to an embodiment of the present disclosure.

Referring to FIG. 24, the vehicle V according to an embodiment of the present disclosure may include one or more battery packs 1 according to an embodiment of the present disclosure or battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may be operated by power supplied from the battery pack 1 or battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a plurality of battery cells having a storage portion and a sealing portion, respectively, and configured to be stacked on each other;
a module case configured to store the plurality of battery cells in an inner space; and
a pressing member positioned to face at least one surface of a terrace portion where an electrode lead is located in the sealing portion of the battery cell, and configured to pressurize the terrace portion when internal pressure inside the battery cell increases.

2. The battery module according to claim 1,
wherein the pressing member comprises:
a first pressing member disposed to face a first surface of the terrace portion; and
a second pressing member disposed to face a second surface of the terrace portion, which faces in an opposite direction of the first surface.

3. The battery module according to claim 2,
wherein the first pressing member and the second pressing member are configured to be capable of being coupled to each other.

4. The battery module according to claim 3,
wherein at least one of the first pressing member or the second pressing member comprises a fastening portion extending toward each other.

5. The battery module according to claim 4,
wherein the fastening portion comprises a hinge fastening portion having one end coupled to the first pressing member so as to rotate around a hinge and the other end coupled to the second pressing member.

6. The battery module according to claim 2,
wherein the first pressing member and the second pressing member are formed integrally.

7. The battery module according to claim 6,
wherein the pressing member comprises a hole through which the terrace portion passes.

8. The battery module according to claim 6,
wherein a plurality of pressing member are provided and at least two of the plurality of pressing members are formed integrally.

9. The battery module according to claim 1,
further comprising a barrier interposed between adjacent battery cells,
wherein the pressing member is attached to the barrier.

10. The battery module according to claim 9,
wherein the pressing member is positioned between the terrace portion of the battery cell and the barrier.

11. The battery module according to claim 1,
wherein the pressing member is configured to be in contact with at least one surface of the terrace portion and pressurize the terrace portion.

12. The battery module according to claim 1,
wherein the plurality of battery cells stand in a first direction and are stacked in a second direction perpendicular to the first direction, and
wherein the pressing member extends in the first direction along the terrace portion.

13. The battery module according to claim 1,
wherein the pressing member comprises an insulating or heat-resistant material.

14. The battery module according to claim 1,
wherein the pressing member comprises a composite layer including different materials.

15. The battery module according to claim 1,
further comprising a bus-bar assembly positioned between the plurality of battery cells and the module case,
wherein the pressing member is disposed to be surrounded by the bus-bar assembly, the storage portion, and the sealing portion.

16. The battery module according to claim 15,
wherein the bus-bar assembly comprises a module bus-bar electrically connected to the electrode lead and a bus-bar housing configured such that the module bus-bar is seated on and fixed to the same, and
wherein the at least one surface of the pressing member is positioned to face an inner surface of the bus-bar housing.

17. The battery module according to claim 1,
wherein a front-back length of the pressing member is greater than a front-back length of the terrace portion.

18. The battery module according to claim 1,
wherein a vertical height of the pressing member is greater than a vertical height of the battery cell.

19. The battery module according to claim 1,
wherein a vertical height of the pressing member is configured to be greater than a distance between an upper plate and a lower plate of the module case, and
wherein the pressing member is configured to be pressurized in a vertical direction by the upper plate and the lower plate.

20. A battery pack comprising a battery module according to any one of claims 1 to 19.

21. A vehicle comprising a battery module according to any one of claims 1 to 19.
